# DEMANDE DE BREVET EUROPEEN

(11) **EP 4 516 536 A1**
(43) Date de publication de la demande: **05.03.2025**
(21) Numéro de dépôt: 24192880.3
(22) Date de dépôt: 05.08.2024
(51) Int. Cl.: B60C 23/00, B60C 19/00

(54) **VALVE ÉTANCHE ET SILENCIEUSE D'UN SYSTÈME DE RÉGULATION DE LA PRESSION D'UN PNEUMATIQUE D'UN VÉHICULE**

(30) Priorité: 31.08.2023 FR 2309161
(71) Demandeur: Teleflow SAS, 42300 Mably (FR)
(72) Inventeur: WALI, Nizar, 42300 MABLY (FR); PLUMEJEAU, Baptiste, 42300 MABLY (FR)
(74) Mandataire: Cabinet Laurent & Charras

(57) **Abrégé**

L'invention concerne une valve (1) d'un système de régulation de pression d'un pneumatique d'un véhicule, la valve (1) comprenant :
- une première partie (2) comprenant un orifice d'admission (6) d'un fluide gazeux sous pression,
- une deuxième partie (3) accouplée à la première partie (2) et comprenant un orifice de dégonflage (8) destiné à communiquer avec le pneumatique, et un orifice d'échappement (9) débouchant entre lesdites deux parties ;
- un système de pilotage (4) à clapet (10) actionnable pour passer d'une position d'obturation de l'orifice d'échappement (9), à une position de libération de l'orifice d'échappement (9) pour dégonfler le pneumatique ;
- une bavette de protection (12) annulaire et tronconique, montée entre les première et deuxième parties (2, 3) et autour de l'orifice d'échappement (9) pour le protéger contre des agents atmosphériques extérieurs, la bavette (12) étant déformable pour laisser le fluide s'échapper entre ladite bavette (12) et la deuxième partie (3) lors du dégonflage du pneumatique ;
***caractérisée*** en ce que l'une des parties comprend une bague anti-vibration (13) coiffant de manière coaxiale la bavette (12), et contre laquelle la bavette de protection (12) est destinée à venir en appui lorsqu'elle est déformée pour bloquer les vibrations de la bavette (12).

## Description

### Domaine technique

La présente invention concerne le domaine technique des systèmes qui permettent de réguler la pression des pneumatiques d'un véhicule, généralement pour les gonfler ou les dégonfler en fonction des conditions de conduite, plus communément appelés CTIS de l'acronyme anglais « Central Tire Inflation System ».

Ces systèmes permettent d'ajuster à distance la pression des pneumatiques d'un véhicule, afin de modifier la portance des roues en fonction de la nature du sol sur lequel le véhicule évolue.

A titre d'exemple, cette fonctionnalité est importante pour les véhicules tout-terrain, qui doivent être en mesure de progresser dans des conditions variées, que ce soit sur des terrains durs, caillouteux, ou meubles, sans que le conducteur ait besoin d'interrompre la conduite pour ajuster manuellement la pression des pneumatiques.

### Art antérieur

Il est connu du document WO 2015/173493 au nom du Demandeur, un dispositif de gonflage-dégonflage automatique d'un pneumatique comprenant :
- une première partie comprenant un système de pilotage monté coulissant dans une première chambre sous l'effet de l'injection d'un fluide gazeux par un orifice d'admission ;
- une deuxième partie, accouplée à la première partie, et définissant une deuxième chambre avec un orifice de gonflage-dégonflage destiné à communiquer avec le pneumatique, et un orifice d'échappement débouchant entre lesdites première et deuxième parties.

Dans ce document, la deuxième partie comprend également un clapet assujetti au système de pilotage de manière à adopter une position de repos dans laquelle il obture l'orifice d'échappement, ou une position de dégonflage, à l'encontre d'un organe élastique de rappel et lorsque le système de pilotage coulisse, dans laquelle il libère l'orifice d'échappement.

Ce dispositif permet donc, par l'injection d'un fluide gazeux, d'entrainer le coulissement du système de pilotage et donc de piloter le clapet pour libérer l'orifice d'échappement pour le dégonflage du pneumatique.

Ce dispositif peut, par exemple, être monté sur des véhicules tout-terrain, lesquels circulent dans des flaques d'eau, dans de la poussière, et/ou de la boue.

Afin d'éviter que les projections de poussières, boue, eau puissent pénétrer dans le dispositif de gonflage-dégonflage et l'endommager, le document WO 2015/173493 prévoit d'intégrer une bavette de protection, de préférence en matériau élastomère, montée entre les première et deuxième parties et autour de l'orifice d'échappement pour le protéger contre des agents atmosphériques extérieurs, tels que boue, eau, poussières, ou tout autre élément indésirable pouvant nuire au fonctionnement du dispositif.

Cette bavette permet de maintenir l'étanchéité du dispositif et d'assurer une protection optimale contre les projections de boue, eau, poussière, ou tout autre élément.

Lorsque le pneumatique est dégonflé, c'est-à-dire lorsque du fluide gazeux, notamment de l'air, est expulsé du dispositif, et s'échappe par l'orifice d'échappement, la bavette en matériau élastomère est repliée pour laisser l'air s'échapper entre ladite bavette et la deuxième partie.

En fonction de la pression du fluide gazeux qui est libéré, la rondelle en matériau élastomère entre en vibration ce qui provoque une nuisance sonore non négligeable.

Afin de remédier à ce problème, le document WO 2015/173493 prévoit que l'une des parties du dispositif comprenne des agencements de réception de la bavette, sous la forme d'une gorge profilée en forme de « V » apte à autoriser ladite bavette à se déformer élastiquement, sous l'effet d'une pression d'un fluide gazeux s'échappant à travers l'orifice d'échappement, pour se libérer d'un appui facial réalisé par une protubérance annulaire que comprend l'autre partie, et créer un passage d'échappement de fluide entre ladite protubérance annulaire et ladite rondelle.

En particulier, en position de repos du dispositif, la protubérance annulaire est en appui forcé contre la bavette, la contraignant à garder une position courbée.

De cette manière, lorsque le pneumatique est dégonflé, c'est-à-dire lorsque du fluide gazeux s'échappe par l'orifice d'échappement, celui-ci contraint la rondelle de protection à se déformer et se courber davantage dans les agencements de réception. De cette manière le fluide sous pression est apte à s'échapper par un passage libéré entre ladite bavette et la saille annulaire. Ainsi, la rondelle n'entre pas en vibration et ne génère aucune nuisance sonore non désirée.

Cependant, en fonction des conditions environnementales dans lesquelles le dispositif est utilisé, et par exemple si de l'eau ou de la boue est stockée dans la zone courbée de la bavette, la pression de l'eau ou de la boue tend à ouvrir le passage initialement obturé par la bavette, ce qui nuit aux performances d'étanchéité.

### Exposé de l'invention

L'un des buts de l'invention est de pallier les inconvénients de l'art antérieur, en proposant une valve d'un système de régulation de la pression d'un pneumatique d'un véhicule qui soit étanche et silencieuse, peu importe les conditions environnementales dans lesquelles la valve est utilisée.

A cet effet, il a été mis au point une valve comprenant une première partie avec un orifice d'admission de fluide gazeux sous pression, ainsi qu'une deuxième partie accouplée à la première partie. La deuxième partie comporte un orifice de dégonflage qui communique avec le pneumatique, et un orifice d'échappement débouchant entre les deux parties.

La valve comprend un système de pilotage à clapet actionnable pour passer d'une position d'obturation de l'orifice d'échappement, à une position de libération de l'orifice d'échappement pour dégonfler le pneumatique.

Pour protéger l'orifice d'échappement contre les agressions extérieures, la valve comprend une bavette de protection annulaire et tronconique, montée entre les première et deuxième parties et autour de l'orifice d'échappement pour le protéger contre des agents atmosphériques extérieurs, la bavette étant déformable pour laisser le fluide s'échapper entre ladite bavette et la deuxième partie lors du dégonflage du pneumatique.

Selon l'invention, l'une des parties comprend une bague anti-vibration coiffant de manière coaxiale la bavette, et contre laquelle la bavette de protection est destinée à venir en appui lorsqu'elle est déformée pour bloquer les vibrations de la bavette tout en préservant les performances de vitesse de dégonflage.

Avantageusement, la valve comprend un élément en matériau fritté, de préférence en bronze fritté, positionné sur un chemin d'échappement du fluide gazeux, et destiné à être traversé par le fluide gazeux lors du dégonflage du pneumatique de sorte à réduire davantage le niveau des nuisances sonores émises par la valve au dégonflage du pneumatique.

Selon une forme de réalisation particulière le chemin d'échappement est, par exemple au moins semi-cylindrique ou cylindrique ou de toute autre forme, et ménagé en périphérie dans le corps de la deuxième partie, en aval de la bavette de protection. Le chemin d'échappement débouche, au niveau d'une première extrémité opposée à la première partie, dans une chambre, de préférence annulaire, obturée par l'élément fritté.

De préférence, le chemin d'échappement débouche à l'extérieur de la valve au niveau d'une deuxième extrémité du côté de la première partie, et au travers de fentes de décompression définies entre la première partie et la deuxième partie pour limiter la surpression en aval et en amont de la bavette dans le but de conserver un fonctionnement optimal du système.

L'invention propose donc une solution technique novatrice pour une valve de régulation de la pression des pneumatiques d'un véhicule, offrant une étanchéité améliorée, un fonctionnement silencieux et une adaptation optimale à diverses conditions environnementales.

D'autres caractéristiques et avantages de l'invention seront mieux compris grâce à la description détaillée des modes de réalisation exposée ci-dessous.

### Description des dessins

[Fig. 1] illustre en perspective un premier mode de réalisation de la valve selon l'invention.
[Fig.2] représente une vue en perspective et en coupe longitudinale de la valve de la [Fig.1].
[Fig.3] représente une vue en perspective et en coupe longitudinale de la valve de la [Fig.1], le plan de coupe étant décalé pour être centré sur l'orifice de dégonflage destiné à communiquer avec le pneumatique.
[Fig.4] est une vue en perspective de la bague anti-vibration coiffant la bavette de protection.
[Fig.5] est une vue en perspective et en coupe longitudinale de la bague anti-vibration et de la bavette de protection.
[Fig.6] illustre en perspective un deuxième mode de réalisation de la valve selon l'invention
[Fig.7] représente une vue en perspective et en coupe longitudinale de la valve de la [Fig.6],
[Fig.8] représente une vue en perspective et en coupe longitudinale de la valve de la [Fig.6], le plan de coupe étant décalé pour être centré sur l'orifice de dégonflage destiné à communiquer avec le pneumatique.

### Description détaillée de l'invention

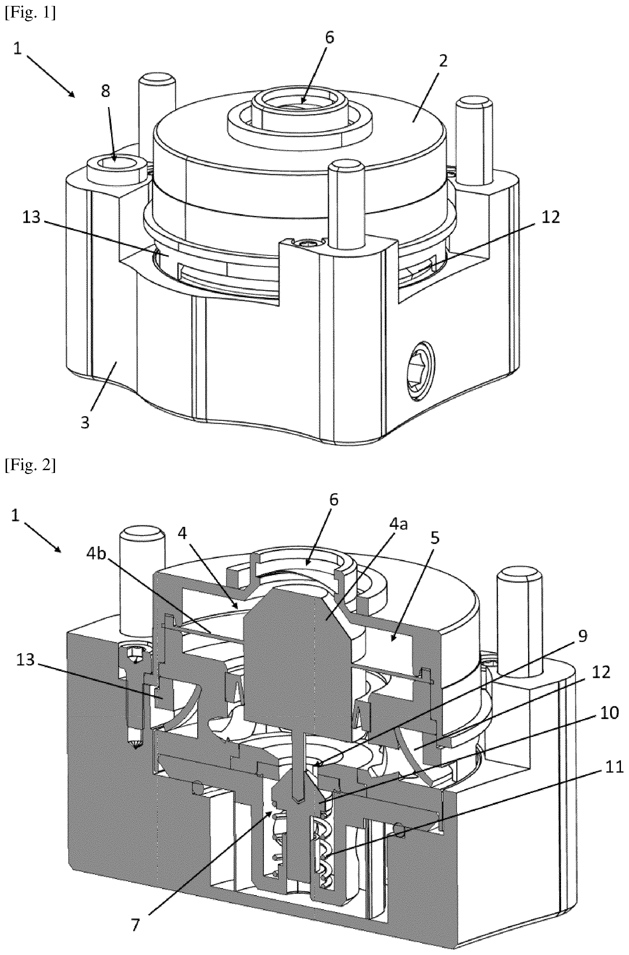

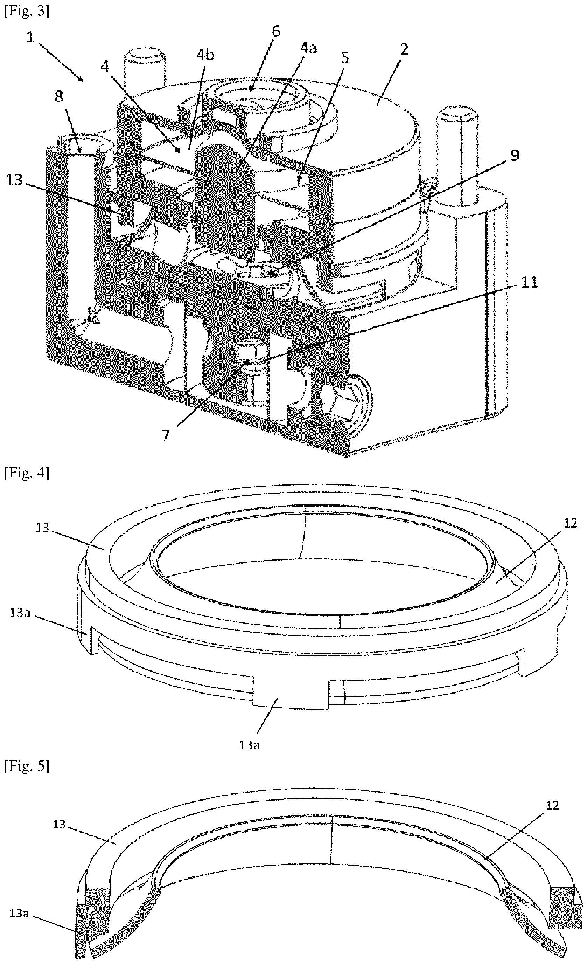

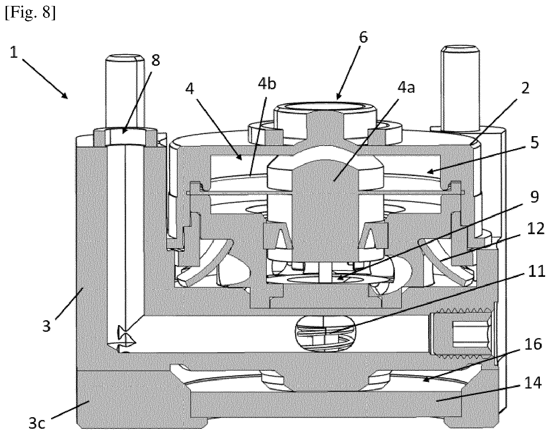

En référence aux figures 1 à 8, l'invention concerne une valve (1) améliorée destinée à être utilisée dans un système de régulation de la pression des pneumatiques d'un véhicule. L'invention offre une étanchéité et un fonctionnement silencieux, peu importe les conditions environnementales dans lesquelles elle est utilisée.

La valve (1) de l'invention comprend une première partie (2) et une deuxième partie (3), accouplées l'une à l'autre, par exemple par vissage.

La première partie (2) est équipée d'un système de pilotage (4) monté coulissant dans une première chambre (5). Ce système de pilotage (4) est constitué d'un piston (4a) ou d'un coulisseau assujetti à une membrane (4b), capable de se déplacer dans une première chambre (5) sous l'effet de l'injection d'un fluide gazeux par un orifice d'admission (6) dans la première chambre (5).

La deuxième partie (3) définit une deuxième chambre (7) avec un orifice de dégonflage (8) destiné à communiquer avec le pneumatique du véhicule, non représenté, et conçu pour permettre la libération contrôlée du fluide gazeux depuis le pneumatique. L'invention permet ainsi un dégonflage du pneumatique directement à la roue, sans remontée d'air jusqu'au bloc de pilotage ou au niveau du châssis du véhicule, ce qui permet une meilleure vitesse de dégonflage, et une indépendance de chaque circuit.

La valve (1) comprend ensuite un orifice d'échappement (9) positionné entre les première et deuxième parties (2, 3) de la valve (1). Cet orifice d'échappement (9) débouche au niveau d'une zone de jonction entre les deux parties et permet l'échappement du fluide gazeux en fonction du positionnement du clapet (10) décrit ci-après.

La deuxième partie (3) de la valve (1) comprend un clapet (10) qui est assujetti au système de pilotage (4) de manière à adopter deux positions principales. En position de repos, notamment illustrée, le clapet (10) obture l'orifice d'échappement (9) en bloquant la sortie du fluide gazeux, forcé dans cette position par un ressort (11). En revanche, en position de dégonflage, le clapet (10) est repoussé à l'encontre du ressort (11) et par le coulissement du système de pilotage (4), ce qui permet de libérer l'orifice d'échappement (9).

Lorsque le clapet (10) est en position de dégonflage, le fluide gazeux peut ainsi s'échapper par l'orifice d'échappement (9) ce qui permet le dégonflage contrôlé du pneumatique.

Pour protéger l'orifice d'échappement (9) contre les agressions extérieures, la valve (1) est équipée d'une bavette de protection (12) annulaire, tronconique et déformable. La bavette (12) est par exemple réalisée en matériau élastomère. Cette bavette (12) est montée entre les première et deuxième parties (2, 3) de la valve (1) et entoure l'orifice d'échappement (9) pour le protéger contre les agents atmosphériques extérieurs.

La bavette de protection (12) tronconique est conçue de manière spécifique pour assurer un contact étanche et souple avec les parties environnantes. Elle comprend une petite base en appui étanche contre la première partie (2), et une grande base qui repose également de manière étanche contre la deuxième partie (3).

Cette conception permet une déformation contrôlée de la bavette (12) lors du dégonflage du pneumatique. Lorsque la valve (1) est en position de dégonflage, la bavette (12) élastomère se déforme, permettant ainsi au fluide gazeux de s'échapper entre la bavette (12) et la deuxième partie (3).

La valve (1) comprend également une bague anti-vibration (13) qui joue un rôle important dans le fonctionnement de la valve (1). La bague anti-vibration (13) est positionnée sur la bavette (12) et de manière coaxiale à celle-ci.

Lors du dégonflage du pneumatique, lorsque la bavette (12) se déforme, elle vient en appui contre la bague anti-vibration (13) de sorte à bloquer les vibrations de la bavette (12) tout en préservant les performances de vitesse de dégonflage.

La bague anti-vibration (13) est de préférence conçue pour assurer un appui discontinu sur la bavette (12) lorsque cette dernière est déformée. A cet effet, la bague comprend une surface d'appui crénelée, ce qui signifie qu'elle présente des crans ou créneaux (13a).

En exerçant un appui discontinu sur la bavette (12), la bague anti-vibration (13) préserve la flexibilité de la bavette (12) tout en la maintenant correctement positionnée. Cela évite tout phénomène de résonance ou d'oscillation indésirable de la bavette (12) pendant le dégonflage, qui pourrait générer des nuisances sonores.

Les créneaux (13a) viennent coiffer la bavette (12) en étant positionnés autour du grand diamètre de ladite bavette (12). Chaque créneau (13a) possède une portion interne en regard de la bavette (12) qui est inclinée pour suivre la paroi tronconique de la bavette. L'appui circonférentiel est réalisé sur la paroi latérale tronconique de la bavette (12), au niveau d'une zone intermédiaire, pour laisser un espace nécessaire à la bavette (12) pour se déformer. L'appui circonférentiel peut être continu ou discontinu.

La bague anti-vibration (13) est fabriquée à partir d'un matériau résistant et durable, capable de supporter les contraintes mécaniques imposées par le fonctionnement de la valve (1). Un matériau rigide tel que l'acier inoxydable ou un alliage métallique approprié peut être utilisé pour assurer une résistance mécanique adéquate.

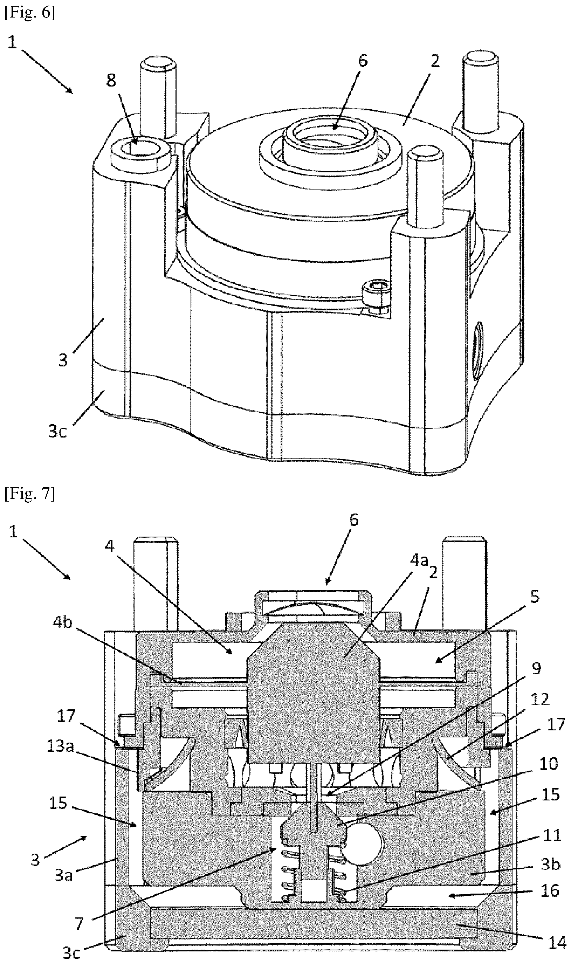

Selon une deuxième forme de réalisation particulière, illustrée aux figures 6 à 8, la valve (1) comprend de préférence un élément (14) en matériau fritté positionné sur un chemin d'échappement (15) du fluide gazeux. La mise en oeuvre de cet élément (14) frittée peut être imaginée indépendamment de l'utilisation de la bague anti-vibration (13). Pour plus d'efficacité, l'élément (14) fritté vient en combinaison avec la bague anti-vibration (13) pour réduire davantage les nuisances sonores au dégonflage.

Le chemin d'échappement (15) est au moins semi-cylindrique et ménagé en périphérie dans le corps de la deuxième partie (3) de la valve (1), en aval de la bavette de protection (12). Semi-cylindrique car dans la forme de réalisation illustrée, il est nécessaire de laisser un passage pour la conduite de dégonflage débouchant sur l'orifice de dégonflage (8). En pratique, le chemin d'échappement (15) est défini dans la deuxième partie (3), entre une portion cylindrique externe (3a) et une portion cylindrique interne (3b) de la deuxième partie (3). Bien entendu, les portions (3a) et (3b) peuvent se présenter sous la forme de pièces indépendantes.

Ce chemin d'échappement (15) débouche au niveau d'une première extrémité, opposée à la première partie (2), dans une chambre (16), de préférence annulaire, qui est obturée par l'élément (14) fritté, maintenu en position par un couvercle (3c) solidaire de la deuxième partie (3). Cette disposition permet au fluide gazeux de passer à travers l'élément (14) fritté tout en limitant la propagation du bruit vers l'extérieur.

L'assemblage entre la première partie (2) et la deuxième partie (3) est réalisé en laissant un jeu entre elles de sorte que la valve (1) comprend en outre des fentes de décompression (17) définies entre la première partie (2) et la deuxième partie (3) de la valve (1).

Ces fentes de décompression (17) communiquent avec l'extérieur de la valve (1) et avec une extrémité supérieure du chemin d'échappement (15) de manière à permettre l'échappement contrôlé du fluide gazeux en excès en cas de pression élevée dans la chambre annulaire où se trouve l'élément (14) fritté. Cela évite toute accumulation excessive de pression, ce qui pourrait compromettre l'intégrité de la valve (1) et entraîner des dysfonctionnements

Il ressort (11) de ce qui précède que l'invention fournit bien une valve d'un système de régulation de la pression d'un pneumatique d'un véhicule qui soit étanche et silencieuse, peu importe les conditions environnementales dans lesquelles la valve est utilisée.

## Revendications

1. Valve (1) d'un système de régulation de pression d'un pneumatique d'un véhicule, la valve (1) comprenant :
- une première partie (2) avec un orifice d'admission (6) d'un fluide gazeux sous pression,
- une deuxième partie (3) accouplée à la première partie (2) et comprenant un orifice de dégonflage (8) destiné à communiquer avec le pneumatique, et un orifice d'échappement (9) débouchant entre lesdites deux parties (2, 3) ;
- un système de pilotage (4) à clapet (10) actionnable pour passer d'une position d'obturation de l'orifice d'échappement (9), à une position de libération de l'orifice d'échappement (9) pour dégonfler le pneumatique
- une bavette de protection (12) annulaire et tronconique, montée entre les première et deuxième parties (2, 3) et autour de l'orifice d'échappement (9) pour le protéger contre des agents atmosphériques extérieurs, la bavette (12) étant déformable pour laisser le fluide gazeux s'échapper entre ladite bavette (12) et la deuxième partie (3) lors du dégonflage du pneumatique ;
***caractérisée* en ce que** l'une des parties (2, 3) comprend une bague anti-vibration (13) coiffant de manière coaxiale la bavette (12), et contre laquelle la bavette de protection (12) est destinée à venir en appui lorsqu'elle est déformée pour bloquer les vibrations de la bavette (12).

2. Valve (1) selon la revendication 1, ***caractérisée* en ce que** la bague anti-vibration (13) comprend une surface d'appui crénelée pour réaliser un appui discontinu sur la bavette (12) lorsque celle-ci est déformée.

3. Valve (1) selon l'une des revendications précédentes, ***caractérisée* en ce qu'**elle comprend un élément (14) en matériau fritté, positionné sur un chemin d'échappement (15) du fluide gazeux, et destiné à être traversé par le fluide gazeux lors du dégonflage du pneumatique de sorte à réduire le niveau des nuisances sonores émises par la valve (1).

4. Valve (1) selon la revendication 3, ***caractérisée* en ce que** le chemin d'échappement (15) est ménagé en périphérie dans le corps de la deuxième partie (3), en aval de la bavette de protection (12), le chemin d'échappement (15) débouchant au niveau d'une première extrémité opposée à la première partie (2) dans une chambre (16) obturée par l'élément (14) fritté.

5. Valve (1) selon la revendication 4, ***caractérisée* en ce que** le chemin d'échappement (15) débouche à l'extérieur de la valve (1) au niveau d'une deuxième extrémité du côté de la première partie (2), et au travers de fentes de décompression (17) définies entre la première partie (2) et la deuxième partie (3) pour limiter la surpression en aval et en amont de la bavette (12).
